# EUROPÄISCHE PATENTSCHRIFT

(11) **EP 2 235 581 B1**
(45) Veröffentlichungstag und Bekanntmachung des Hinweises auf die Patenterteilung: **04.10.2017**
(21) Anmeldenummer: 08871098.3
(22) Anmeldetag: 11.12.2008
(51) Int. Cl.: G02B 27/01

(54) **ANZEIGEVORRICHTUNG FÜR EIN KFZ SOWIE VERFAHREN FÜR DIE DARSTELLUNG EINES BILDES**
DISPLAY DEVICE FOR A MOTOR VEHICLE, AND METHOD FOR REPRESENTING AN IMAGE
DISPOSITIF D'AFFICHAGE POUR VÉHICULE À MOTEUR, ET PROCÉDÉ PERMETTANT LA REPRÉSENTATION D'UNE IMAGE

(30) Priorität: 16.01.2008 DE 102008004629; 10.12.2008 DE 102008054443
(43) Veröffentlichungstag der Anmeldung: 06.10.2010
(73) Patentinhaber: Robert Bosch GmbH, 70442 Stuttgart (DE)
(72) Erfinder: HERZOG, Bernhard, 70619 Stuttgart (DE); FIESS, Reinhold, 7770 Durbach (DE); KAEFER, Stefan, 70469 Stuttgart (DE); SLICKERS, Dirk, 71254 Ditzingen (DE); GRIMM, Dietmar, 71696 Moeglingen (DE)
(86) Internationale Anmeldenummer: PCT/EP2008/067277
(87) Internationale Veröffentlichungsnummer: WO 2009/089968

(56) Entgegenhaltungen:
- EP-A- 0 475 796
- WO-A-2007/056289
- DE-A1- 10 036 570
- FR-A- 2 832 843
- FR-A- 2 897 446
- US-A- 3 533 104
- US-A- 5 200 844
- US-A1- 2005 286 010
- US-B1- 6 975 369

## Beschreibung

Die Erfindung betrifft eine Anzeigevorrichtung für ein Kfz nach dem Oberbegriff des Anspruchs 1 sowie ein Verfahren für die Darstellung eines Bildes nach dem Oberbegriff des Anspruchs 16.

### Stand der Technik

Anzeigevorrichtungen für ein Kfz, insbesondere in Form von sogenannten Head-up Displays (HUD) sind bereits in vielfältigen Ausführungsformen bekannt geworden.

Bei einer Ausführungsform wird mit einem Laserprojektor über eine Scanner-Einheit zur Ablenkung eines Laserstrahls und optische Elemente ein Bild auf eine Projektionsfläche, die die Bildebene darstellt und z. B. die Innenseite der Windschutzscheibe ist, eingeschrieben.

Damit lässt sich ein Bild mit vergleichsweise hohem Kontrast erzielen.

Ein Laserprojektor kann über entsprechende optische Elemente ein Bild auch auf einen separaten "Combiner" einschreiben, der für einen Betrachter sichtbar ist. Damit lässt sich bei reduziertem Bauraum und einem Blickwinkel z. B. bis zu 15 Grad ein Bild unabhängig von einer Windschutzscheibe erzeugen.

Bei einer weiteren Ausführungsform kann ein Laserprojektor auch im Bereich des Innenrückspiegels angeordnet sein und ein Bild über eine diffraktive Streuscheibe auf die Windschutzscheibe abbilden, das dann für einen Fahrzeuginsassen als virtuelles Bild sichtbar ist.

Die deutsche Offenlegungsschrift DE 100 36 570 A1 offenbart eine Anzeigevorrichtung, die zur Anzeige von Bildern und/oder Daten in einem Fahrzeug dient. Die Anzeigevorrichtung umfasst eine Projektionseinheit und eine Anzeigefläche, wobei die Projektionseinheit an einem Fahrzeugdach bzw. an einem Fahrzeuginnenspiegel angeordnet ist. Die Anzeigefläche dient insbesondere der Darstellung eines von der Projektionseinheit erzeugten reellen Bildes. Zur Erzeugung eines Farbbildes sind drei Lasereinheiten vorgesehen deren Lichtstrahl über in zwei Raumrichtungen veränderbare Spiegel ablenkbar ist, so dass mittels der Spiegel eine Abtastung einer Anzeigefläche durch die Laserstrahlen gewährleistet ist.

Laserprojektoren mit einer Scannereinheit, insbesondere einer zweiachsigen Scannereinheit und drei Lasern für die Farben Rot, Grün, Blau sind vergleichsweise aufwendig. Außerdem haben Laserprojektoren den Nachteil, dass durch das kohärente Licht der Laser Bildartefakte auftreten können.

Aus der EP 0475796 A1 ist eine Projektionsvorrichtung bekannt, bei der verschiedene Lichtstrahlen für eine Projektion zusammengesetzt werden, deren Polarisation orthogonal zueinander ist. Die Lichtstrahlen werden dabei durch einen Modulator beeinflusst.

Aus der WO 2007/056289 A1 ist eine Vorrichtung zur Beleuchtung einer Flüssigkristallanzeige bekannt, bei der eine Laserdiode die Flüssigkristallanzeige von der Rückseite beleuchtet. Die Displayfläche wird dabei mittels eines Scanners oder eines Strahlaufweiters abgetastet.

Aus der US 6,975,369 B1 ist eine Flüssigkristallanzeige mit einer farblichen Hinterleuchtung bekannt, bei der nacheinander die Anzeige mit verschiedenen Farben hinterleuchtet wird.

### Aufgabe und Vorteile der Erfindung

Der Erfindung liegt die Aufgabe zugrunde, eine alternative Anzeigevorrichtung für ein Kfz bereitzustellen, die eine vergleichsweise verbesserte Bildqualität ohne komplexeren Aufbau aufweist.

Diese Aufgabe wird durch die Merkmale des Anspruchs 1 bzw. des Anspruchs 13 gelöst. In den abhängigen Ansprüchen sind vorteilhafte und zweckmäßige Weiterbildungen der Erfindung angegeben.

Die Erfindung geht von einer Anzeigevorrichtung für ein Kfz für die Darstellung eines Bildes aus, das für mindestens einen Fahrzeuginsassen sichtbar ist. Die Anzeigevorrichtung weist ein transmissives oder reflektives Lichtventil, insbesondere eine Matrix-Anzeige auf z. B. Flüssigkristallbasis auf. Des Weiteren ist eine Beleuchtungseinheit für eine flächenhafte Beleuchtung des Lichtventils vorgesehen. Der Kern der Erfindung liegt nun darin, dass die Beleuchtungseinheit einen Laser und/oder eine LED (Lichtemittierende Diode), z. B. eine Laserdiode, und eine Strahlaufweitung umfasst.

Diese Konstruktion wird insbesondere dann vorteilhaft, wenn mehrere Laser und/oder LEDs zum Einsatz kommen. Denn dann lässt sich das Lichtventil, z. B. eine Matrix-Anzeige, nacheinander mit den Lasern oder den LEDs mit unterschiedlicher Wellenlänge und damit unterschiedlicher Lichtfarbe sequentiell beleuchten, so dass bei ausreichender Geschwindigkeit der Einzelbilder für den Betrachter ein Farbbild entsteht. LEDs oder Laser sind in der Lage, erforderliche Schaltgeschwindigkeit bereitzustellen.

Durch den Einsatz eines Lichtventils, z. B. einer LCD- Matrixanzeige oder einer Matrixanzeige mit Mikrospiegeln, kann auf eine zweidimensionale Scanner-Einheit zur Ablenkung von Laserstrahlen verzichtet werden.

Insgesamt ist mit einer erfindungsgemäßen Struktur auch eine vergleichsweise gute Miniaturisierung eines Projektionssystems möglich. Denn durch das farblich sequentielle Abarbeiten der Bilder ist im Vergleich zu einer Farb-Matrixanzeige bei gleicher Farbauflösung lediglich ein Drittel der Bildpunktzahl erforderlich. Theoretisch könnte das Lichtventil damit bei gleicher Auflösung in der Fläche ein Drittel kleiner sein.

Als Lichtventil kann z. B. ein reflektives LCOS-Display (Liquid Cristal on Silicon) oder ein transmissives oder reflektives HTPS-TFT-Display (high temperature poly-silicon thin-film transistor Display) eingesetzt werden.

Ferner ist es vorteilhaft, dass an dem Lichtventil eine Einrichtung zur Kühlung und/oder eine Einrichtung zur Heizung des Lichtventils angeordnet ist. Denn insbesondere bei einer Verwendung von Flüssigkristallanzeigen als Lichtventil treten sowohl bei hohen, als auch bei tiefen Temperaturen Beeinträchtigungen einer Wiedergabe auf. Bei tiefen Umgebungstemperaturen, die insbesondere bei einem Fahrzeugstart bei Frost auftreten können, können kurze Schaltzeiten eine Bilddarstellung und insbesondere eine Farbwiedergabe beeinträchtigen. Vorteilhaft ermöglicht hierbei eine Heizung der Anzeige, dass eine geeignete Betriebstemperatur schnell erreicht werden kann. Ferner können auch zu hohe Temperaturen eine Bilddarstellung beeinträchtigen, so dass Kühlelemente vorteilhaft an dem Lichtventil vorgesehen sind.

Zur Farbbilderzeugung werden sequentiell mehrere Laser und/oder LEDs für jeweils unterschiedliche Farben synchronisiert mit einem Bildinhalt auf dem Lichtventil für die jeweilige Farbe für eine vorgegebene Zeitspanne eingeschaltet.

In einer bevorzugten Ausgestaltung der Erfindung wird mit der Beleuchtungseinheit das Lichtventil sequentiell mit den Farben Rot, Grün und Blau beaufschlagt. Damit lässt sich ein Bild in realistischen Farben darstellen.

Ebenfalls denkbar ist lediglich die Verwendung von zwei Farben, z. B. Rot und Grün.

Erfindungs gemäß sind Kontrollmittel vorgesehen, eine Beleuchtungszeitspanne für eine Farbe zeitlich mit einer Beleuchtungszeitspanne einer anderen Farbe überlappen zu lassen. Beispielsweise wird ein roter Laser sich teilweise mit der Zeitspanne, die der grüne Laser eingeschaltet ist, überlappen. Dadurch lassen sich insbesondere bei einem Einsatz von Flüssigkristall-Displays bei tiefen Temperaturen Kontrast und Helligkeit der Anzeigevorrichtung optimieren.

In diesem Zusammenhang ist es besonders vorteilhaft, wenn die Kontrollmittel die Überlappung temperaturabhängig vornehmen. Zum Beispiel findet eine Überlappung der Beleuchtungszeitspannen der unterschiedlich farbigen Lichtquellen erst unterhalb von z. B. minus 5° Celsius statt. Die Überlappung kann im Extremfall z. B. bei sehr langen Displayschaltzeiten aufgrund sehr tiefer Temperaturen in eine Darstellung mit nur einer Farbe übergehen, z. B. Rot für Warnungen und Grün für Anzeigen ohne Warnfunktion. Zur Feststellung der Temperatur kann in einer ersten Ausführungsform das Head-Up-Display selbst ein Temperaturmessmittel aufweisen, dass beispielsweise als ein Temperaturmessmittel zur Messung der Temperatur des Lichtventils ausgeführt ist. Wenn eine Heizung bzw. eine Kühlung vorhanden ist, kann die Heizung bzw. die Kühlung ebenfalls über die von diesem Temperaturmessmittel bereitgestellte Temperaturinformation angesteuert werden. In einer anderen Ausführungsform kann die Temperaturinformation dem Head-Up-Display auch beispielsweise von einem externen Messmittel, beispielsweise über einen Datenbus, zugeführt werden.

In einer überdies bevorzugten Ausgestaltung der Erfindung ist eine Projektionsstruktur für die Projektion eines Bildes des Lichtventils auf eine Projektionsfläche ausgebildet. Beispielsweise ist die Anzeigevorrichtung als Head-up-Display aufgebaut, bei dem das projizierte Bild in eine Windschutzscheibe eingespiegelt wird. Denkbar ist auch das Einspiegeln des projizierten Bildes in einen "Combiner". Ebenso wie im einleitend beschreibenden Stand der Technik, kann der Projektor auch im Dachbereich z. B. in der Nähe des Innenspiegels oder am Innenspiegel angeordnet werden.

In einer überdies bevorzugten Ausgestaltung der Erfindung umfasst die Projektorstruktur eine Einheit zur Erzeugung eines Zwischenbildes, z. B. wird das Bild auf eine Streuscheibe abgebildet. Damit lassen sich Bildartefakte vermeiden, die sich aus Interferenzerscheinungen von kohärentem Laserlicht einstellen können.

Die Erzeugung eines Zwischenbildes kann auch unmittelbar auf einer Windschutzscheibe stattfinden. Die Zwischenbildebene kann gewölbt sein. Dementsprechend sollte auch eine gewölbte Streufläche vorliegen. Als Streufläche kommen transmissive, diffraktive oder refraktive optische Mikrostrukturen in Betracht. Ebenfalls denkbar sind reflektive optische Mikrostrukturen, z. B. diffraktive Mikrostrukturen oder Strukturen mit mikrooptischen Spiegelelementen.

In einer außerdem bevorzugten Ausgestaltung der Erfindung ist eine Dimm-Einrichtung zwischen Laser bzw. LED und dem Lichtventil vorgesehen. Die Dimm-Einrichtung umfasst vorzugsweise ein weiteres modulierbares optisches Element, vorzugsweise eine passive LC-Zelle. Damit wird eine Lichtdimmung realisiert, wobei das Lichtventil in einem bevorzugten Bereich einer Transmissionskennlinie betrieben werden kann.

Im Weiteren ist es bevorzugt, wenn dem Lichtventil eine optische Mikrostruktur, die eine definierte Aufweitung und/oder Ausrichtung der Lichtstrahlen bewirkt, nachgeordnet ist. Beispielsweise wird ein Mikrolinsenarray eingesetzt, das vorzugsweise vor jedem Bildpunkt des Lichtventils eine Linse bereitstellt. Es ist jedoch auch denkbar, eine nachgeordnete optische Mikrostruktur als diffraktive Struktur auszuführen.

Mehrere Ausführungsbeispiele der Erfindung sind in den Zeichnungen dargestellt und werden nachstehend unter Angabe weiterer Vorteile und Einzelheiten näher erläutert.

Es zeigen:
- Fig. 1: ein schematisches Schnittbild eines Head-up-Displays mit einem Projektor,
- Fig. 2: den schematischen Aufbau eines Laser-TFT-Projektors für ein Head-up-Display,
- Fig. 3: Diagramme, die die sequentielle Beleuchtungszeitspanne für drei Laser mit unterschiedlicher Wellenlänge in Bezug auf entsprechende Bildinhalte eines Lichtventils veranschaulichen,
- Fig. 4: zu Figur 3 entsprechende Diagramme jedoch für zwei Laser mit unterschiedlicher Wellenlänge und einem überlappenden Betrieb der Laser,
- Fig. 5: der prinzipielle optische Aufbau eines Projektors nach den Laserlichtquellen und
- Fig. 6: eine Detailansicht des in Fig. 5 mit A gekennzeichneten kreisförmigen Teilbereichs

### Beschreibung der Ausführungsbeispiele

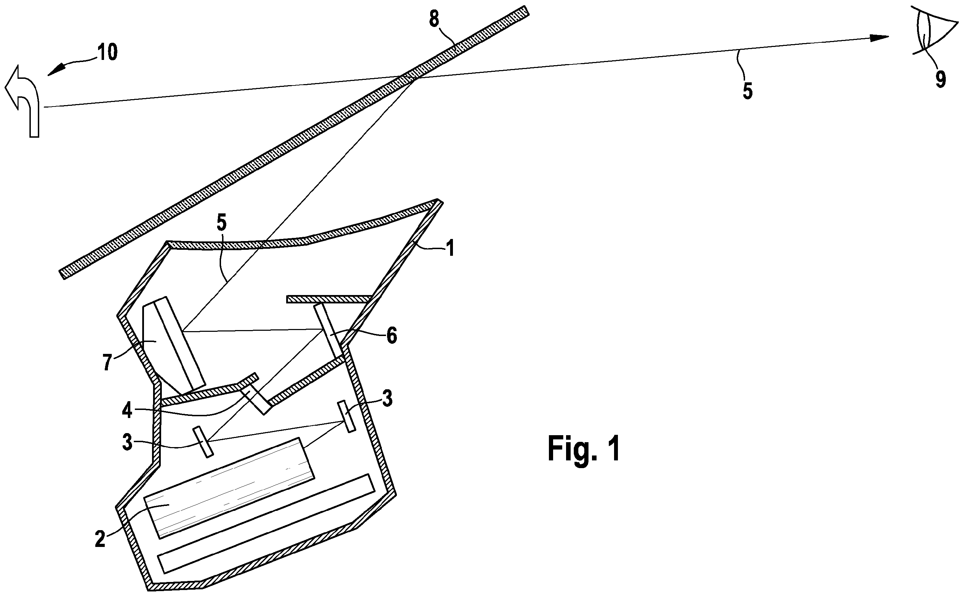

In Fig. 1 ist der prinzipielle Aufbau eines Head-up-Displays dargestellt. In einem Gehäuse 1 ist ein Projektor 2, z. B. ein Laserprojektor als Bildquelle angeordnet. Das Bild wird über einen Faltspiegel 3 auf eine Projektionsfläche 4 abgebildet, um dort ein Zwischenbild zu erzeugen. Auf diese Weise werden optische Artefakte durch das Laserlicht eliminiert. Die Projektionsfläche ist vorzugsweise eine streuende diffraktive Scheibe. Anschließend wird der Lichtstrahl 5 über einen weiteren Umlenkspiegel 6 und einen Lupenspiegel 7 auf die Innenseite einer Windschutzscheibe 8 projiziert und erreicht nach einer Totalreflektion z. B. das Auge 9 eines Fahrzeuginsassen, der an der Stelle 10 ein virtuelles Bild des vom Projektor 2 erzeugten Bildes wahrnimmt. In dem in der Figur 1 dargestellten Aufbau ist das Head-Up-Display mit dem Gehäuse 1 in eine Instrumententafel eines Fahrzeugs integriert. Ferner ist es jedoch auch möglich, dass das Head-Up-Display einen Projektor aufweist, der als ein eigenständiges Gerät im Fahrzeug angeordnet werden kann, beispielsweise in einem Mobiltelefon oder einem PDA (Personal Digital Assistent). Hierbei ist es beispielsweise möglich, ergänzend oder alternativ zu einer drahtgebundenen Datenübertragung eine drahtlose Schnittstelle, beispielsweise eine Bluetooth-Schnittstelle vorzusehen. Über diese Schnittstelle kann das Head-Up-Display mit einer Fahrzeugelektronik, beispielsweise einem Fahrzeugdatenbus, verbunden werden, um Fahrzeugdaten an das Head-Up-Display zu übertragen. Die angezeigten Daten können dabei von Fahrzeuggeräten übertragen werden, beispielsweise eine Geschwindigkeitsinformation oder ein aufgetretener Fehler des Fahrzeugs. Ferner ist es auch möglich, von weiteren Geräten, die von einem Benutzer in das Fahrzeug eingebracht werden, beispielsweise ein Mobiltelefon oder ein mobiles Navigationsgerät, Daten an das Head-Up-Display zu übertragen. So ist es beispielsweise möglich, das von einem mobilen Navigationsgerät Bilddaten über eine Schnittstelle an ein in das Fahrzeug eingebautes Heady-Up-Display für eine Anzeige im Fahrzeug übertragen werden.

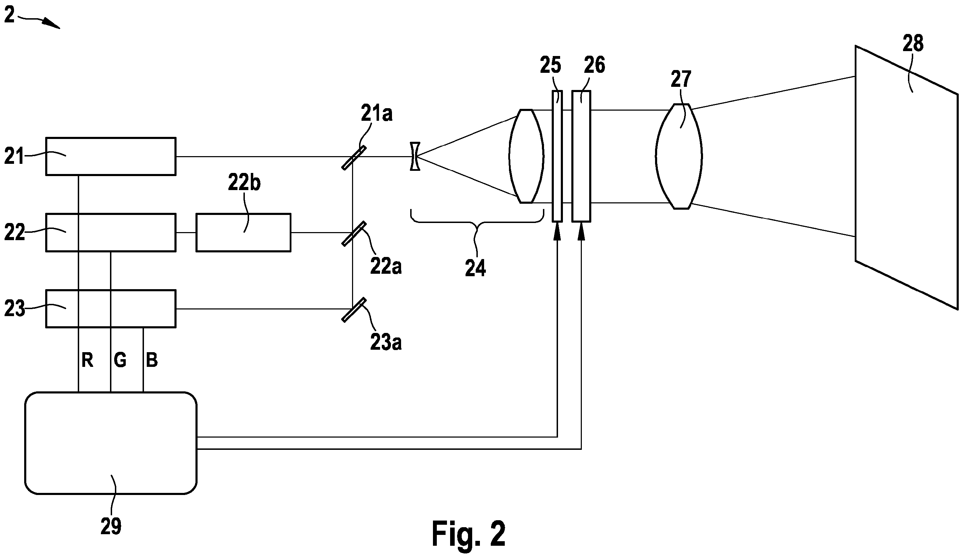

In Fig. 2 ist ein schematischer Aufbau eines Projektors dargestellt, wie er beispielsweise im Head-up-Display gemäß Fig. 1 zur Anwendung kommt.

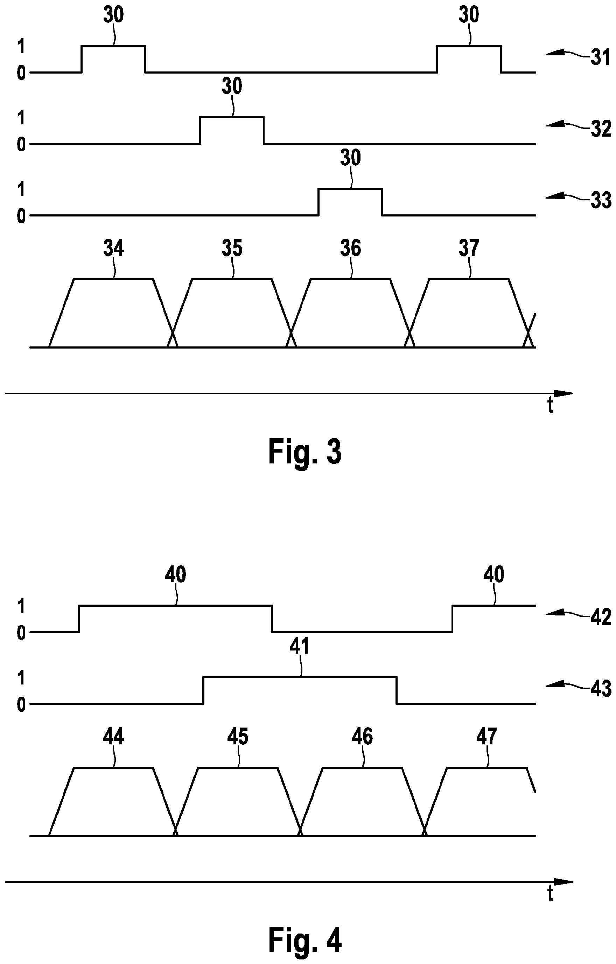

Der Projektor 2 umfasst drei Laserlichtquellen 21, 22, 23. Die Laserlichtquellen 21 und 23 liefern die Farben Rot und Blau, wobei die Laserlichtquelle 22 beispielsweise ein Infrarotlaser ist, dessen Licht z. B. durch ein Element 22b in der Frequenz verdoppelt wird, so dass auf Umlenkspiegel 21a, 22a, 23a die Lichtfarben Rot, Grün, Blau treffen. Die jeweiligen Lichtstrahlen werden in einer Kollimationsoptik 24 aufgeweitet und durchlaufen ein Dimmelement 25 und ein transmissives Lichtventil 26, z. B. eine Matrix-TFT-Flüssigkristallanzeige. Das in den Elementen 25 und 26 modellierte Licht erreicht über eine Abbildungsoptik 27 eine Projektionsfläche 28. Sowohl die Laserlichtquellen 21, 22, 23 als auch das Dimmelement 25 und das transmissive Lichtventil 26 werden von einem Videocontroller 29 gesteuert. Eine Möglichkeit der Ansteuerung ist in Diagrammen in Fig. 3 veranschaulicht.

An dem Lichtventil ist in einer ersten Ausführungsform eine Heizung angeordnet. In einer ersten Ausführungsform ist hierbei eine Heizung über die Display-Fläche vorgesehen. In einer Ausführungsform ist diese Heizung als eine ITO-Schicht ausgeführt, an die eine Spannung angelegt wird. Durch den Spannungsabfall kommt es zu einer Erwärmung der ITO-Schicht und damit auch zu einer Erwärmung der Display-Fläche. In einer weiteren Ausführungsform ist es auch möglich, ein Heizelement, beispielsweise ein Widerstands-Heizelement, an einem Rand des Displays anzuordnen. Über die Wärmeleitung überträgt sich, insbesondere bei einer sehr kleinen Displayfläche, die Wärme über die gesamte Fläche des Displays.

In einer weiteren Ausführungsform ist es auch möglich, an dem Lichtventil 26 eine Kühleinrichtung vorzusehen. Die Kühleinrichtung wird abhängig von einer Umgebungstemperatur bzw. von einer Display-Temperatur aktiviert. Sie kann beispielsweise als ein Peltierelement oder als eine Heat-Pipe ausgeführt sein, die insbesondere an einem Rand der Fläche des Lichtventils 26 angeordnet sind. In einer weiteren Ausführungsform kann auch ein Kühlgebläse vorgesehen sein, dessen Luftstrom auf eine Fläche des Lichtventils 26 gerichtet ist, um bei einer hohen Temperaturbelastung des insbesondere als eine Flüssigkristallanzeige ausgeführten Lichtventils diese in einem spezifikationsgemäßen Temperaturbereich zu halten.

Die Laserlichtquellen 21, 22, 23 werden sequentiell für eine gewisse Zeitspanne eingeschaltet, was in Fig. 3 durch die Pulse 30 veranschaulicht werden soll. Beispielsweise betrifft das erste Diagramm 31 die Farbe Rot, das zweite Diagramm 32 die Farbe Grün und das dritte Diagramm 33 die Farbe Blau.

Die Diagramme 31, 32, 33 sind in Bezug auf den Zeitstrahl t zusehen. Für den Fall, dass der rote Laser aktiv ist, wird
z. B. über den Videocontroller 29 auf das Lichtventil 26 ein Teilbild 34 für die Farbe Rot eingeschrieben. Anschließend wird der rote Laser abgeschaltet und der grüne Laser eingeschaltet und entsprechend ein neues Teilbild 35 auf das Lichtventil 26 eingeschrieben. Dann folgt das Teilbild 36 für die Farbe Blau entsprechend dem Puls 30 im Diagramm 33. Dann wird erneut eine Teilbild 37 für die Farbe Rot eingeschrieben usw.. Dieser Vorgang läuft so schnell ab, dass das menschliche Auge die Teilbilder nicht auflösen kann, sondern ein integriertes Bild wahrnimmt, das sich aus den Teilbildern zusammensetzt und ein Bild in z. B. Echtfarben ergibt.

Ein Projektor 2 kann jedoch auch mit überlappenden Beleuchtungszeitspannen 40, 41 gemäß der Diagramme 42, 43 in Figur 4 arbeiten.

In Fig. 4 ist der Spezialfall dargestellt, dass lediglich zwei Laserlichtquellen eingesetzt werden. Das Diagramm 42 spiegelt einen roten Laser und das Diagramm 43 einen grünen Laser wider.

Während der Zeitspanne 40, in welcher lediglich der rote Laser tief ist, wird z. B. ein rotes Teilbild 44 in das Lichtventil eingeschrieben. Dann folgt ein Überlappungsbereich, in welchem sowohl der rote Laser als auch der grüne Laser aktiv ist. Die Zeitspannen 40 und 41 überdecken sich. Während dieser Zeit wird z. B. ein Teilbild 45 für die Farbe Gelb eingeschrieben. Anschließend folgt ein Zeitabschnitt, in welchem lediglich der grüne Laser aktiv ist. Während dieses Zeitabschnitts wird in das Lichtventil 26 ein Teilbild 46 für die Farbe Grün eingeschrieben. Daraufhin startet der Zyklus erneut mit einem Teilbild 47 für die Farbe Rot. Unterhalb der Diagramme 42, 43 sowie der Darstellung der Teilbilder 44 bis 47 ist der Zeitstrahl t dargestellt, auf den sich die Abläufe beziehen. Verschiedenste weitere Kombinationen sind denkbar.

In den Figuren 3 und 4 bedeutet in den Diagrammen 31, 32, 33, 42, 43 ein Pegel 1, dass der jeweilige Laser aktiv ist, wogegen ein Pegel 0 für den abgeschalteten Laser steht.

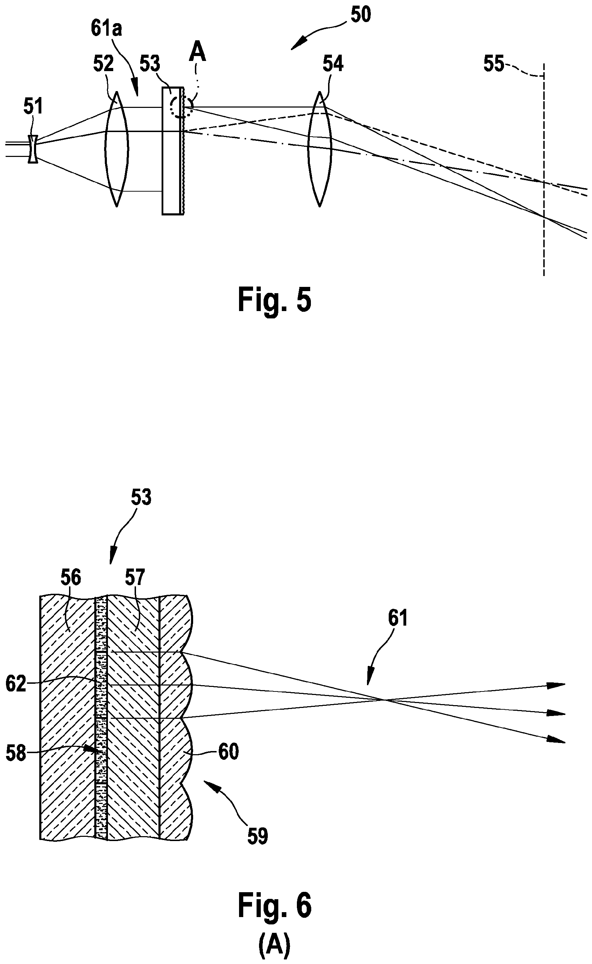

Fig. 5 zeigt einen optischen Teilbereich einer Abbildungsoptik eines Laserprojektors. Dieser Teilbereich 50 umfasst eine Kollimationsoptik 51, 52. Daraufhin folgt in einem Strahlengang 61a ein Matrix-Display 53 und eine anschließende Abbildungsoptik 54 bevor die Lichtstrahlen auf eine Abbildungsebene 55 treffen. Die Besonderheit dieses Aufbaus ist in der vergrößerten Detailansicht gemäß Fig. 6 zu sehen. Im herkömmlichen Aufbau des Matrix-Displays 53 aus zwei Glassubstraten 56, 57, zwischen welchen ein Flüssigkristallmaterial 58 eingebettet ist und je nach Ansteuerzustand durchlaufendes Licht unterschiedlich moduliert, folgt eine Mikrooptik 59 mit Mikrolinsen 60, die jedem einzelnen Pixel 62 zugeordnet sind und das durchlaufende Licht 61 nach dessen Austritt aus der Zelle 56, 57, 58 bündeln. Damit lässt sich eine Konzentration des durchlaufenden Lichts auf einen Projektionskorridor bewirken, wodurch eine Erhöhung der Lichtausbeute realisiert wird.

## Patentansprüche

1. Anzeigevorrichtung für ein Kfz für die Darstellung eines Bildes, das für mindestens einen Fahrzeuginsassen sichtbar ist, mit einem Lichtventil (26) und einer Beleuchtungseinheit (21, 22, 23) für eine flächenhafte Beleuchtung des Lichtventils (26), wobei die Beleuchtungseinheit (21, 22, 23) einen Laser und/oder eine LED mit einer Strahlaufweitungseinrichtung (24) umfasst, wobei mehrere Laser (21, 22, 23) und/oder LEDs vorgesehen sind und wobei die Laser (21, 22, 23) und/oder LEDs unterschiedliche Lichtfarben bereitstellen, **dadurch gekennzeichnet, dass** die Beleuchtungseinheit dazu ausgelegt ist, sequentiell die mehreren Laser (21, 22, 23) und/oder LEDs für jeweils unterschiedliche Farben synchronisiert mit einem Bildinhalt auf dem Lichtventil (26) für die jeweilige Farbe für eine vorgegebene Zeitspanne (30, 40, 41) einzuschalten, und dass Kontrollmittel vorgesehen sind, eine Beleuchtungszeitspanne (40,41) für eine Farbe mit einer Beleuchtungszeitspanne (40, 41) einer anderen Farbe zeitlich überlappen zu lassen.

2. Vorrichtung nach Anspruch 1, **dadurch gekennzeichnet, dass** die Strahlaufweitungseinrichtung eines Kollimationsoptik (24) aufweist.

3. Vorrichtung nach einem der vorhergehenden Ansprüche, **dadurch gekennzeichnet, dass** drei Laser (21, 22, 23) und/oder LEDs mit unterschiedlichen Lichtfarben vorhanden sind.

4. Vorrichtung nach einem der vorhergehenden Ansprüche, **dadurch gekennzeichnet, dass** mit der Beleuchtungseinheit (21, 22, 23) das Lichtventil (26) sequentiell mit den Farben Rot, Grün, Blau beaufschlagbar ist.

5. Vorrichtung nach einem der vorhergehenden Ansprüche, **dadurch gekennzeichnet, dass** mit der Beleuchtungseinheit (21, 22, 23) das Lichtventil (26) sequentiell mit den Farben Rot und Grün beaufschlagbar ist.

6. Vorrichtung nach einem der vorhergehenden Ansprüche, **dadurch gekennzeichnet, dass** die Kontrollmittel (29) die Überlappung temperaturabhängig vornehmen.

7. Vorrichtung nach einem der vorhergehenden Ansprüche, **dadurch gekennzeichnet, dass** mittels der Kontrollmittel (29) die Überlappung soweit vorstellbar ist, dass in einem Extremfall die Überlappung in eine Darstellung mit nur einer Farbe übergeht.

8. Vorrichtung nach einem der vorhergehenden Ansprüche, **dadurch gekennzeichnet, dass** eine Projektorstruktur (2) für die Projektion eines Bildes des Lichtventils (26) auf eine Projektionsfläche (28, 55) ausgebildet ist.

9. Vorrichtung nach einem der vorhergehenden Ansprüche, **dadurch gekennzeichnet, dass** die Projektorstruktur eine Einheit zur Erzeugung eines Zwischenbildes umfasst.

10. Vorrichtung nach einem der vorhergehenden Ansprüche, **dadurch gekennzeichnet, dass** eine Dimmeinrichtung (25) zwischen Laser bzw. LED und dem Lichtventil (26) vorgesehen ist.

11. Vorrichtung nach einem der vorhergehenden Ansprüche, **dadurch gekennzeichnet, dass** in Abbildungsrichtung dem Lichtventil (26) eine optische Mikrostruktur (59) nachgeordnet ist, die eine definierte Aufweitung und/oder Ausrichtung von Lichtstrahlen bewirkt.

12. Vorrichtung nach einem der vorhergehenden Ansprüche, **dadurch gekennzeichnet, dass** eine Heizeinrichtung zur Erwärmung des Lichtventils (26) und/oder eine Kühleinrichtung zur Kühlung des Lichtventils (26) vorgesehen ist.

13. Verfahren für die Darstellung eines Bildes, das für mindestens einen Fahrzeuginsassen sichtbar ist, mit einem Lichtventil (26) und einer Beleuchtungseinheit (21, 22, 23) für das Lichtventil (26), wobei zur Beleuchtung mit mehreren Lasern (21, 22, 23) und/oder LEDs für unterschiedliche Lichtfarben sequentiell farbige Beleuchtungen realisiert werden, die auf einen Bildinhalt des Lichtventils abgestimmt sind; **dadurch gekennzeichnet, dass** Kontrollmittel vorgesehen sind, eine Beleuchtungszeitspanne (40, 41) für eine Lichtfarbe mit einer Beleuchtungszeitspanne (40, 41) einer anderen Lichtfarbe zeitlich überlappen zu lassen.

## Claims

1. Display apparatus for a motor vehicle for representing an image visible to at least one vehicle occupant, comprising a light valve (26) and an illumination unit (21, 22, 23) for areally illuminating the light valve (26), wherein the illumination unit (21, 22, 23) comprises a laser and/or an LED with a beam expanding device (24), wherein a plurality of lasers (21, 22, 23) and/or LEDs are provided and wherein the lasers (21, 22, 23) and/or LEDs provide different light colours, **characterized in that** the illumination unit is designed to switch on sequentially the plurality of lasers (21, 22, 23) and/or LEDs for respectively different colours in a manner synchronized with an image content on the light valve (26) for the respective colour for a predefined time period (30, 40, 41), and **in that** control means are provided for allowing an illumination time period (40, 41) for one colour to temporally overlap an illumination time period (40, 41) of another colour.

2. Apparatus according to Claim 1, **characterized in that** the beam expanding device comprises a collimation optical unit (24).

3. Apparatus according to either of the preceding claims, **characterized in that** three lasers (21, 22, 23) and/or LEDs having different light colours are present.

4. Apparatus according to any of the preceding claims, **characterized in that** the colours red, green, blue can be applied sequentially to the light valve (26) by means of the illumination unit (21, 22, 23).

5. Apparatus according to any of the preceding claims, **characterized in that** the colours red and green can be applied sequentially to the light valve (26) by means of the illumination unit (21, 22, 23).

6. Apparatus according to any of the preceding claims, **characterized in that** the control means (29) implement the overlap in a temperature-dependent manner.

7. Apparatus according to any of the preceding claims, **characterized in that** by means of the control means (29) the overlap can be advanced to an extent such that in an extreme case the overlap undergoes transition to a representation with only one colour.

8. Apparatus according to any of the preceding claims, **characterized in that** the projector structure (2) is designed for projecting an image of the light valve (26) onto a projection surface (28, 55).

9. Apparatus according to any of the preceding claims, **characterized in that** the projector structure comprises a unit for generating an intermediate image.

10. Apparatus according to any of the preceding claims, **characterized in that** a dimming device (25) is provided between laser or LED and the light valve (26).

11. Apparatus according to any of the preceding claims, **characterized in that** an optical microstructure (59) is disposed downstream of the light valve (26) in the imaging direction, said optical microstructure bringing about a defined expansion and/or orientation of light beams.

12. Apparatus according to any of the preceding claims, **characterized in that** provision is made of a heating device for heating the light valve (26) and/or a cooling device for cooling the light valve (26).

13. Method for representing an image visible to at least one vehicle occupant, with a light valve (26) and an illumination unit (21, 22, 23) for the light valve (26), wherein coloured illuminations are realized sequentially for the purpose of illumination with a plurality of lasers (21, 22, 23) and/or LEDs for different light colours, said coloured illuminations being coordinated with an image content of the light valve; **characterized in that** control means are provided for allowing an illumination time period (40, 41) for one light colour to temporally overlap an illumination time period (40, 41) of another light colour.

## Revendications

1. Dispositif d'affichage pour un véhicule automobile pour la représentation d'une image, laquelle est visible pour au moins un occupant du véhicule, comprenant une valve optique (26) et une unité d'éclairage (21, 22, 23) pour un éclairage de surface de la valve optique (26), l'unité d'éclairage (21, 22, 23) comprenant un laser et/ou une LED doté d'un dispositif d'élargissement du rayon (24), plusieurs lasers (21, 22, 23) et/ou LED étant présents et les lasers (21, 22, 23) et/ou les LED fournissant des couleurs de lumière différentes, **caractérisé en ce que** l'unité d'éclairage est conçue pour allumer séquentiellement les plusieurs lasers (21, 22, 23) et/ou LED pour des couleurs respectivement différentes de manière synchronisée avec un contenu d'image sur la valve optique (26) pour la couleur respective pendant un intervalle de temps (30, 40, 41) prédéfini, et
**en ce qu'**il existe des moyens de contrôle pour faire se superposer dans le temps l'intervalle de temps d'éclairage (40, 41) pour une couleur avec l'intervalle de temps d'éclairage (40, 41) d'une autre couleur.

2. Dispositif selon la revendication 1, **caractérisé en ce que** le dispositif d'élargissement du rayon possède une optique de collimation (24).

3. Dispositif selon l'une des revendications précédentes, **caractérisé en ce qu'**il existe trois lasers (21, 22, 23) et/ou LED avec des couleurs de lumière différentes.

4. Dispositif selon l'une des revendications précédentes, **caractérisé en ce que** l'unité d'éclairage (21, 22, 23) permet d'exposer séquentiellement la valve optique (26) aux couleurs rouge, vert, bleu.

5. Dispositif selon l'une des revendications précédentes, **caractérisé en ce que** l'unité d'éclairage (21, 22, 23) permet d'exposer séquentiellement la valve optique (26) aux couleurs rouge et vert.

6. Dispositif selon l'une des revendications précédentes, **caractérisé en ce que** les moyens de contrôle (29) effectuent la superposition en fonction de la température.

7. Dispositif selon l'une des revendications précédentes, **caractérisé en ce que** les moyens de contrôle (29) permettent de présenter la superposition à tel point que dans un cas extrême, la superposition devient une représentation avec une seule couleur.

8. Dispositif selon l'une des revendications précédentes, **caractérisé en ce qu'**une structure de projecteur (2) est formée pour la projection d'une image de la valve optique (26) sur une surface de projection (28, 55).

9. Dispositif selon l'une des revendications précédentes, **caractérisé en ce que** la structure de projecteur comprend une unité destinée à générer une image intermédiaire.

10. Dispositif selon l'une des revendications précédentes, **caractérisé en ce qu'**il existe un dispositif de gradation (25) entre le laser ou la LED et la valve optique (26).

11. Dispositif selon l'une des revendications précédentes, **caractérisé en ce qu'**une microstructure optique (59) est disposée à la suite de la valve optique (26) dans le sens de la représentation, laquelle produit un élargissement et/ou une orientation définie des rayons lumineux.

12. Dispositif selon l'une des revendications précédentes, **caractérisé en ce qu'**il existe un dispositif de chauffage destiné à chauffer la valve optique (26) et/ou un dispositif de refroidissement destiné à refroidir la valve optique (26).

13. Procédé pour la représentation d'une image, laquelle est visible pour au moins un occupant d'un véhicule, comprenant une valve optique (26) et une unité d'éclairage (21, 22, 23) pour la valve optique (26), des éclairages en couleur étant réalisés séquentiellement avec plusieurs lasers (21, 22, 23) et/ou LED de couleurs différentes en vue de l'éclairage, lesquels sont accordés sur un contenu d'image de la valve optique, **caractérisé en ce qu'**il existe des moyens de contrôle pour faire se superposer dans le temps un intervalle de temps d'éclairage (40, 41) pour une couleur de lumière avec un intervalle de temps d'éclairage (40, 41) d'une autre couleur de lumière.
